# EUROPEAN PATENT APPLICATION

(11) **EP 2 749 590 A1**
(43) Date of publication of application: **02.07.2014**
(21) Application number: 13182152.2
(22) Date of filing: 29.08.2013
(51) Int. Cl.: C08K 9/00, C08K 3/00, C08K 5/00, H01B 3/00

(54) **Insulation resin material for high voltage equipment and high voltage equipment using the same**

(30) Priority: 28.12.2012 JP 2012287815
(71) Applicant: Hitachi Industrial Equipment Systems Co., Ltd., Tokyo (JP)
(72) Inventor: Ootake, Atsushi, Chiyoda-ku, Tokyo 100 8280 (JP); Kobayashi, Chie, Chiyoda-ku, Tokyo 100 8280 (JP); Kato, Tetsuji, Chiyoda-ku, Tokyo 100 8280 (JP)
(74) Representative: Gill, Stephen Charles

(57) **Abstract**

The present invention provides an insulation resin material containing a filler for high voltage equipment includes a polar resin, a hardener, a filler, and fine particles added to at least one of the polar resin and the hardener, and having polar organic substituents exposed at the surface thereof. According to this invention, an insulation resin material for high voltage equipment which is easy to control viscosity, does not cause a problem of filler settling, and provides easy handling in the molding process such as molding, and high voltage equipment using the insulation resin material can be provided.

## Description

### BACKGROUND OF THE INVENTION

### 1. Field of the Invention

The present invention relates to an insulation resin material suitable to high voltage equipment such as transformers, motors, breakers, and high voltage devices, and to high voltage equipment using the insulation resin material.

### 2. Description of the Related Art

JP-2009-203431-A discloses potting epoxy resin compositions, which have no undesired effects on mechanical characteristics of equipment such as molded ignition coils, provide improved working efficiency, allow for suppression of settling of fillers, and also are excellent in electric characteristics. The compositions described in JP-2009-203431-A essentially include a main ingredient and a hardening ingredient, wherein the main ingredient contains an epoxy resin, fractured fused silica having a number average particle size of 10 to 20 µm and a spherical fused silica having a number average particle size of 10 to 30 µm, and the hardening ingredient contains a cycloaliphatic acid anhydride hardener, a fractured fused silica having a number average rain size of 10 to 20 µm, spherical fused silica having a number average particle size of 10 to 30 µm, and an anti-settling agent comprising an organic bentonite.

### SUMMARY OF THE INVENTION

High voltage equipment, typically represented by transformers, motors, breakers, and high voltage devices, has been downsized from a view point of energy saving and resource conservation. When such high voltage equipment using insulation resin is downsized, however, it poses problems of cracking and deterioration of insulation due to decrease in the film thickness of the insulation resin. Thus such insulation resins need to be more improved in strength and resistance to high voltage.

For this purpose, various fillers are often incorporated in insulators used for high voltage equipment.

If the viscosity of the resin material is excessively low, filler settling may occur during storage of the resin materials. In contrast, if the viscosity of the resin material is excessively high, handling of the resin material in the forming processes such as molding becomes extremely difficult, which causes defects such as formation of cavities in the resin. Such defects not only deteriorate electric insulation but also become a cause of mechanical strength lowering.

However, the potting epoxy resin composition disclosed in JP-2009-203431-A is applied mainly to ignition coils. If the composition is applied simply to transformers, motors, breakers, or high voltage devices, the potting epoxy resin composition will be insufficient for these devices to exhibit higher strength and resistance to high voltage. Originally, epoxy resin compositions used for them are different from that for ignition coils.

Further, since the potting epoxy resin composition of JP-2009-203431-A contains an organic bentonite as an anti-settling additive, there may be a worry about remarkable increase in viscosity and poor dispersion of bentonite per se and, further, the viscosity is difficult to control.

In addition, since thin layers of bentonite are separated and dispersed in nature, it is extremely difficult to subject bentonite to dispersion control. As a result, bentonite is not suitable as the anti-settling additive.

The present invention intends to provide an insulation resin material for high voltage equipment which is easy to control viscosity, does not cause a problem of filler settling, and provides easy handling in the molding process such as molding, and to provide high voltage equipment using the insulation resin material.

The problems described above can be overcome according to the feature of the invention. The present invention provides several configurations, for example, an insulation resin material for high voltage equipment comprising a polar resin, a hardener, a filler, and fine particles added to at least one of the polar resin and the hardener and having organic substituents exposed to the surface thereof.

The invention can provide an insulation resin material for high voltage equipment which is easy to control viscosity, does not cause a problem of filler settling, and provides easy handling in the molding process such as molding, and provide high voltage equipment using the resin material. As a result, the molding efficiency of the insulation material to the high voltage equipment is improved and the reliability of the high voltage equipment can be improved further.

### BRIEF DESCRIPTION OF THE DRAWINGS

Fig. 1 is an explanatory view illustrating an example of the effect of fine particles addition in a preferred embodiment of an insulation resin material for high voltage equipment according to the invention;
Fig. 2 is an explanatory view illustrating another example of the effect of fine particles addition in a preferred embodiment of an insulation resin material for high voltage equipment according to the invention;
Fig. 3 is an explanatory view illustrating an example of a structure of an epoxy resin in a preferred embodiment of the insulation resin material for high voltage equipment according to the invention;
Fig. 4 is a graph showing viscosity characteristic of an insulation resin material for high voltage equipment according to the invention, which is characteristic graph showing pseudo plasticity during storage at 40°C;
Fig. 5 is a graph showing viscosity characteristic of an insulation resin material for high voltage equipment according to the invention, which is characteristic graph showing pseudo plasticity during use at 80°C;
Fig. 6 is a characteristic graph showing settling characteristics of a filler in an insulation resin material for high voltage equipment according to the invention;
Fig. 7 is a characteristic graph showing a relation between the addition amount of particles and filler settling in an insulation resin material for high voltage equipment according to the invention;
Fig. 8 is a characteristic graph showing a relation between a settling velocity and a Brownian motion in an insulation resin material for high voltage equipment according to the invention; and
Fig. 9 is a perspective view partially in cross section of a mold transformer as high voltage electric equipment applied with the insulation resin material for high voltage equipment according to the invention.

### DESCRIPTION OF THE PREFERRED EMBODIMENTS

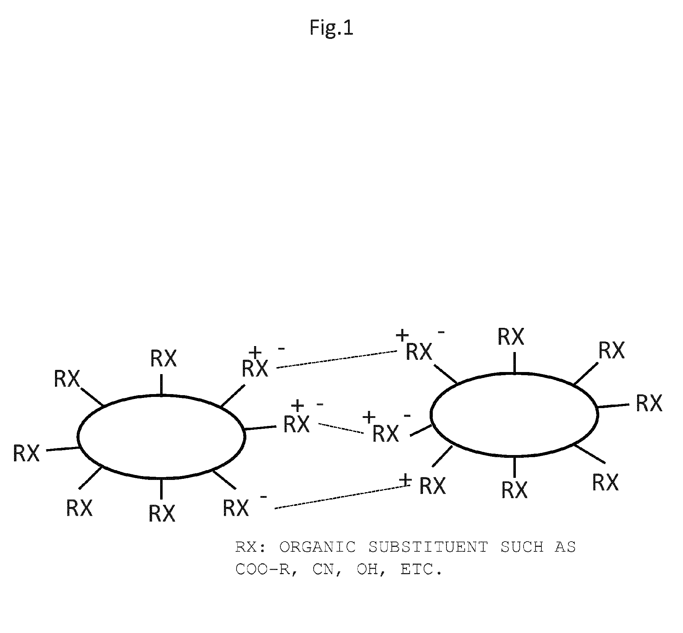

Preferred embodiments of an insulation resin material for high voltage equipment and high voltage equipment according to the invention are to be described with reference to Fig. 1 to Fig. 9.

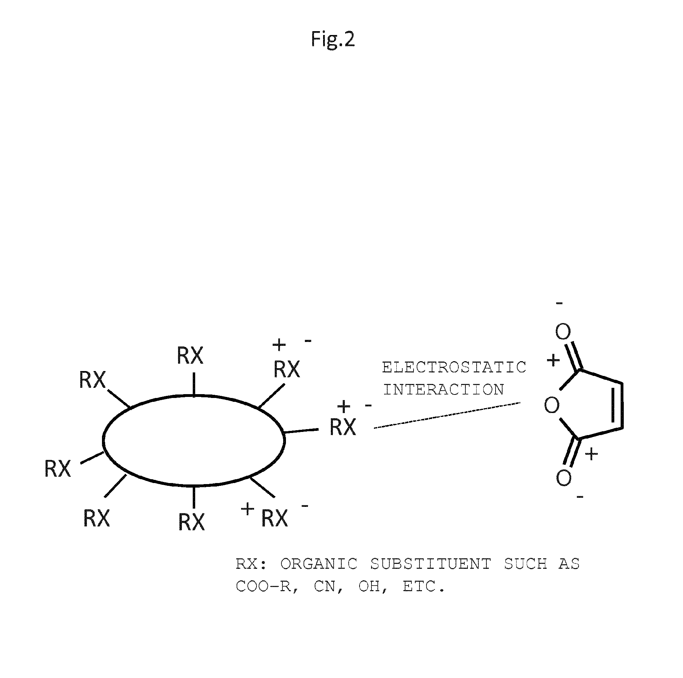

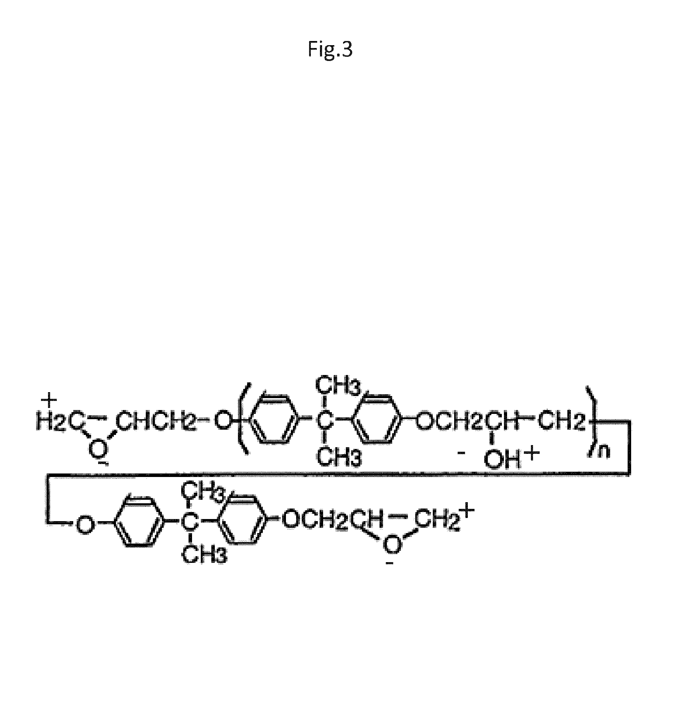

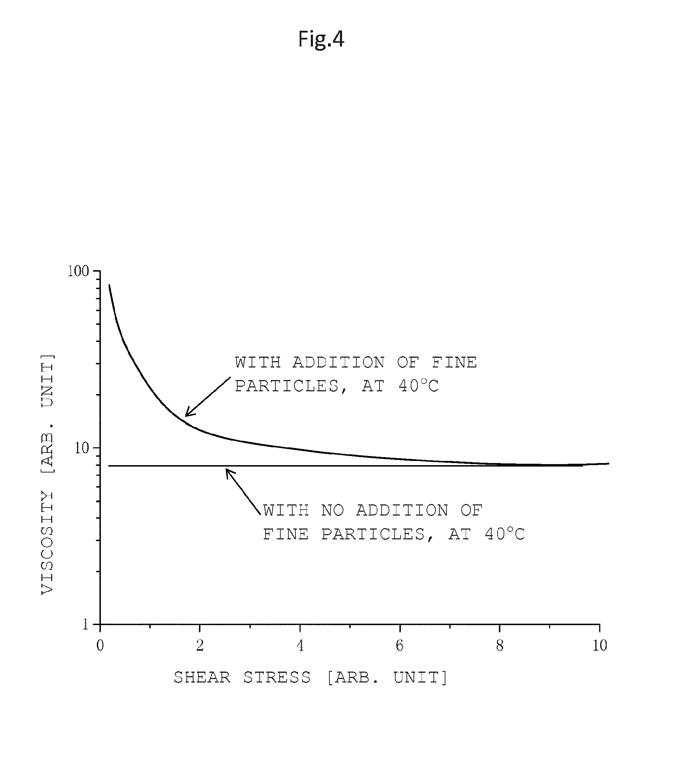

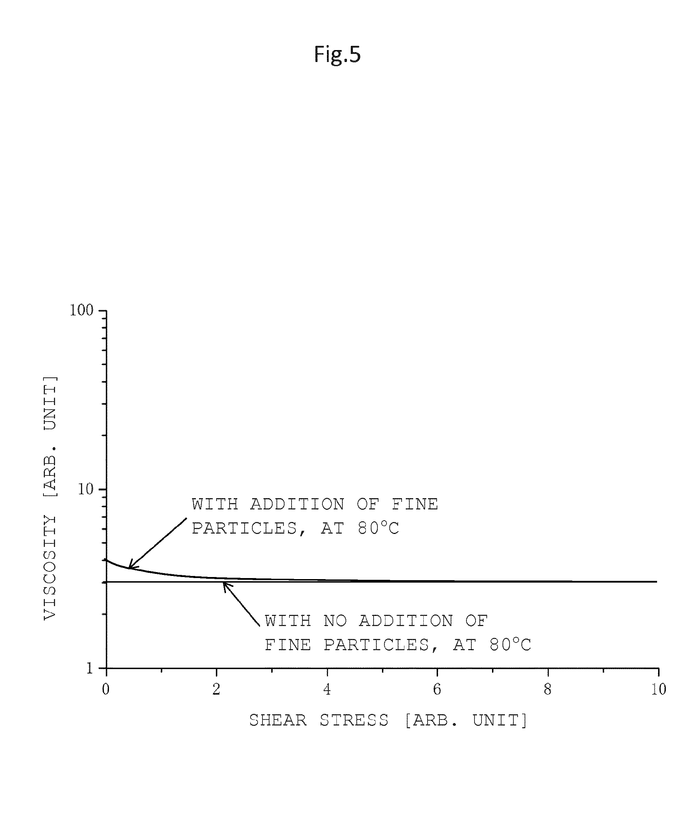

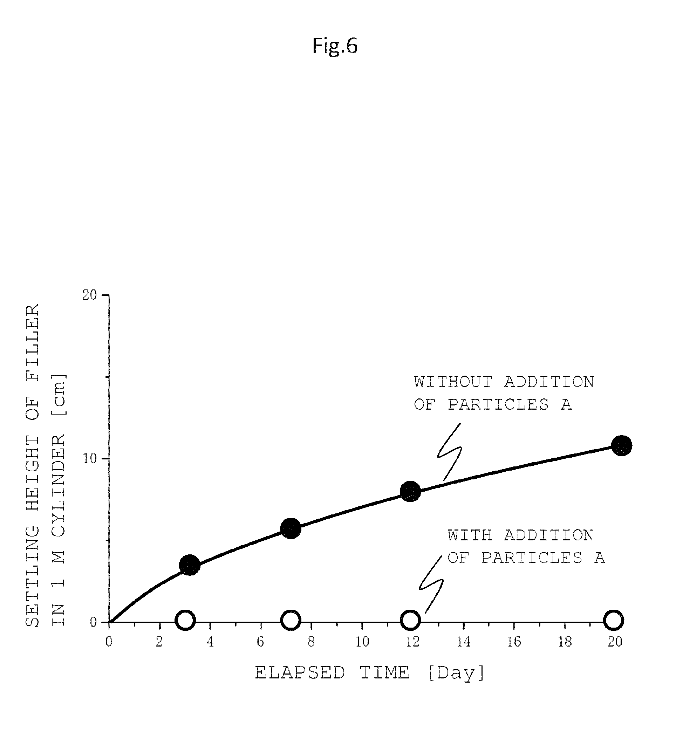

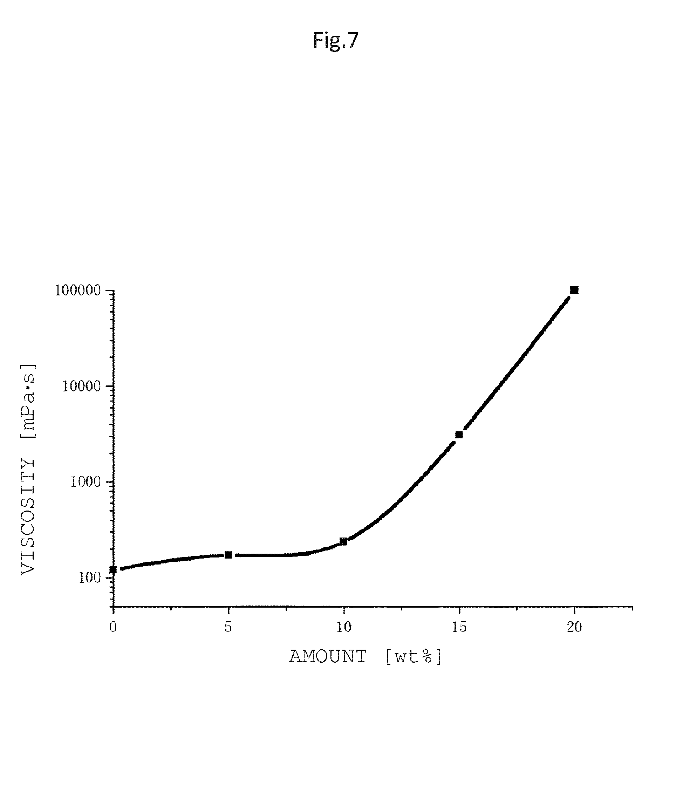

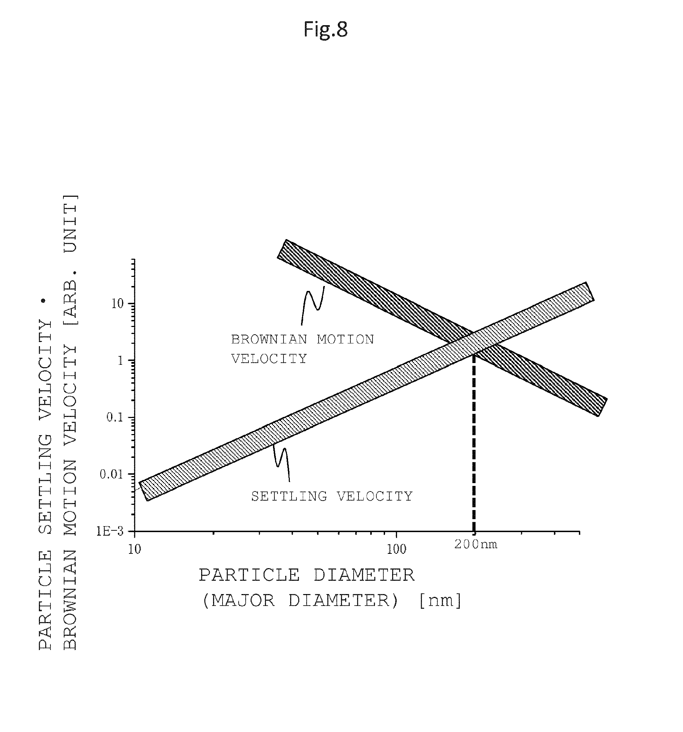

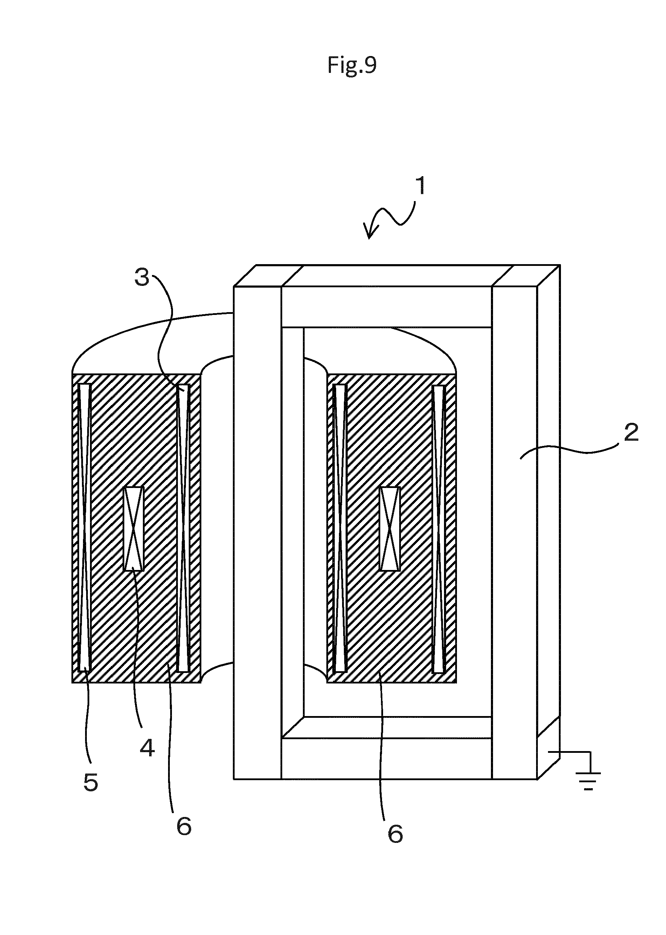

Fig. 1 is an explanatory view illustrating an example of the effect of fine particles addition in a preferred embodiment of an insulation resin material for high voltage equipment according to the invention, Fig. 2 is an explanatory view illustrating another example of the effect of fine particles addition in a preferred embodiment of an insulation resin material for high voltage equipment according to the invention, Fig. 3 is an explanatory view illustrating an example of a structure of an epoxy resin in a preferred embodiment of the insulation resin material for high voltage equipment according to the invention, Fig. 4 is a graph showing viscosity characteristics of an insulation resin material for high voltage equipment according to the invention, which is a characteristic graph showing pseudo plasticity during storage at 40°C, Fig. 5 is a graph showing viscosity characteristics of an insulation resin material for high voltage equipment according to the invention, which is a characteristic graph showing pseudo plasticity during use at 80°C, Fig. 6 is a characteristic graph showing settling characteristics of a filler in an insulation resin material for high voltage equipment according to the invention, Fig. 7 is a characteristic graph showing a relation between the addition amount of particles and filler settling in an insulation resin material for high voltage equipment according to the invention, Fig. 8 is a characteristic graph showing a relation between a settling velocity and a Brownian motion in an insulation resin material for high voltage equipment according to the invention, and Fig. 9 is a perspective view partially in cross section of a mold transformer as high voltage electric equipment applied with the insulation resin material for high voltage equipment according to the invention.

The resin material according to the invention prevents settling of an added filler during storage at a normal temperature (-10°C to 40°C), has viscosity at a temperature in actual use (70°C to 120°C) identical with that of conventional resin materials. Besides, the resin material contains a polar resin, a hardener, a filler, and fine particles. The fine particles are added to at least one of the polar resin and the hardener and have polar organic substituents exposed to the surface, whereby the insulation resin material for high voltage equipment before hardening is caused to develop pseudo plasticity at a normal temperature and eliminate such pseudo plasticity at a temperature during use.

As the polar resin, those resins having polarity can be used and, particularly, epoxy resins can be used suitably.

The epoxy resin material as the resin contains many OH groups, carboxyl groups, epoxy groups, etc. in the molecular structure, and many polarized groups are present and electric charges are localized in the resin per se. Accordingly, the polarized groups and the polar organic substituents such as COOR groups, CN groups, and OH groups present on the surface of the added fine particles tend to cause electrostatic interaction at a normal temperature. Accordingly, this provides an effect of increasing the viscosity, particularly when shear stress is not applied. Settling velocity of particles of the filler is lowered due to the Stokes' 1aw when the viscosity is high and filler settling in the inside of the container can be prevented during storage.

Further, any hardener that chemically reacts with the resin material to harden the resin material can be used suitably with no particular restriction. Such hardener includes, for example, acid anhydride type, amine type, imidazole type, and polymercaptane type hardeners and, particularly, organic compounds containing an acid anhydride structure can be applied preferably.

As the filler, usual organic or inorganic fillers well known in the relevant field can be used for addition. Particularly, one of silica, alumina, and titania, or combination of them is preferred.

The fine particles are added to at least one of the polar resin and the hardener, and polar organic substituents are exposed to the surface of the particle. Since the organic substituents are exposed to the surface, the insulation resin material for high voltage equipment exhibits pseudo plasticity at a normal temperature before hardening and eliminates the pseudo plasticity, which has been developed at the normal temperature, at a temperature during use.

As the organic substituents exposed to the surface of the fine particle, at least one of chemical species of COOR group (where R represents hydrogen, an alkyl group, or an organic substituent having a multiple bond), CN group, OH group, vinyl group, amine group, nitroso group, and carbonyl group can be used preferably.

The fine particles may be one of silica particles, elastomer particles, and alumina particles, or a mixture of such particles.

Generally, the silica particles contribute to improvement of electric insulation. As the silica particles, silica produced by a flame method can be used particularly suitably.

There are several silica production processes and, in the flame method, a silane compound is oxidized by a flame at a high temperature to obtain silica. The silica particles obtained by the flame method have less OH groups at the surface, exhibit high compatibility with resins of relatively low polarity and can provide the effect of developing and eliminating the pseudo plasticity described above.

Further, more preferred effect of increasing the viscosity can be obtained by substituting less OH groups at the surface of silica obtained by the flame method with other organic or inorganic compounds.

The elastomer particles contribute to cracking resistance. Elastomer particles include, particularly preferably, nitrile butadiene rubber or styrene butadiene rubber, or silicone rubber.

An identical effect can be expected by surface modification for the elastomer particles and, in addition, it has been known that fracture toughness of the resin can be improved and the elastomer particles can improve the handleability of the resin before hardening and the cracking resistance of the resin after hardening.

In particular, nitrile butadiene rubber contains CN groups in the inside and, naturally, CN groups are exposed also at the surface. Accordingly, the nitrile butadiene rubber has high compatibility with the polar resin such as the epoxy resin and is further preferred.

The silicone rubber is excellent in heat resistance and suitable particularly when the heat resistance performance is demanded.

Further, when the resin material is used for breakers, etc., alumina particles can be selected since importance is attached to corrosion resistance.

The fine particles include particles requiring and not requiring surface modification. Particles requiring surface modification are those not having polar groups in the molecule constituting the particle. Particles not requiring the surface modification are those having the polar groups in the molecule constituting the particles. For example, since the nitrile butadiene rubber has CN groups in the molecular structure, surface modification is not necessary, whereas the butadiene rubber requires surface modification by polar groups since the butadiene rubber has no polar groups.

The shape of the fine particles is not particularly restricted but a minor diameter is preferably 200 nm or less. The minor diameter of the fine particle in this invention means an average value for the minimum diameters of substantially spherical particles when the fine particles are observed under SEM or the like.

The reasons that the minor diameter is desirably 200 nm or less is as described below.

The viscosity of a usual epoxy resin material or a mixture with an acid anhydride hardener not incorporating a filler is about 0.1 to 1 Pa•s at a normal temperature. A necessary condition at which a Stokes' terminal velocity (settling velocity) and the velocity of Brownian motion are balanced so that the fine particles addition are not settled under the situation is about 200 nm of particle diameter. Accordingly, it can be said that if the minor diameter of the fine particles is 200 nm or less, the possibility that the additive per se settles spontaneously is low. Further, after the introduction of the filler, the viscosity exceeds 5 Pa•s and occurrence of settling can be suppressed further.

The addition amount of the fine particles may be small in any cause and can be selected suitably based on the cost and the property required for the resin (for example, whether attached to one of electric insulation, cracking resistance, and cost or importance is attached to all of them).

In particular, it is preferably from 0.1 wt% to 15 wt% by mass based on the insulation resin material for high voltage equipment.

According to the investigation conducted by the present inventors, a necessary addition amount of the fine particles to provide the anti-settling effect described above more intensely is 0.1 wt% or more by mass based on the insulation resin material for high voltage equipment. Further, when the addition amount of the fine particle is 15 wt% or less based on the insulation resin material for high voltage equipment, abrupt increase of the viscosity can be prevented and specific viscosity characteristics described above can be maintained intensely.

The resin material according to the invention may also contain additives such as an anti-sagging agent, an anti-settling agent, a defoaming agent, a leveling agent, a slipping agent, a dispersant, a substrate wetting agent, etc. within a range not deteriorating the desired effect of the invention.

According to this embodiment, the viscosity characteristics of the resin material before hardening can be controlled depending on temperature.

In particular, the resin material before hardening exhibits pseudo plasticity at a room temperature (-10°C to 40°C), to remarkably increase the viscosity in a state where shear stress is not applied on the resin. On the other hand, the pseudo plasticity is substantially eliminated at a temperature during use (70°C to 120°C). This is because electrostatic interaction exerting between each of the fine particles having polar organic substituents such as COOR group, CN group, OH group, vinyl group, amino group, nitroso group, and carbonyl group, or between the fine particle and the polar resin material will disappear at the temperature during use.

Further, when fractured silica is added, for example, as a filler, the viscosity often exceeds 35 Pa•s at 25°C even with no addition of the fine particles. By the way, the temperature in a storage circumstance sometimes increases to about 40°C, for example, in a summer season and the viscosity often lowers to about 25 Pa•s. The filler settling velocity in this case sometimes exceeds 1 cm/day in a drum can of 1.5 m height, and a silica settling phase is deposited by as much as 30 cm to the bottom of the drum can when the resin material is stored as long as for one month. Such a state results in a problem that the quality of the resin is denatured and removal of deposited silica becomes substantially difficult.

In conventional usual resin materials, viscosity can be increased at a room temperature (-10°C to 40°C) by adding the filler which causes increase of the viscosity. However, since the effect continues even when temperature becomes higher (temperature during use), this results in a problem that the handleability during use becomes difficult (viscosity is excessively high and the resin does not flow to the mold during production).

Further, since insulation materials for high voltage equipment are often incorporated with a great amount of filler, if the viscosity is excessively low, this causes a problem of the filler settling during storage. On the other hand, if the viscosity is increased excessively high, handling of molds, etc. in the course of molding is extremely difficult to cause defects such as cavities in the inside of the resin. Such defects not only deteriorate electric insulation but also lower mechanical strength.

However, according to the invention, since such interaction is eliminated at a temperature in actual use

(temperature in a molding process, etc: 70°C to 120°C) and the viscosity is substantially equal with that before addition of the particles, thereby handling is facilitated as in the conventional case. Further, the resin material can be maintained at a high viscosity due to pseudo plasticity at a room temperature (-10°C to 40°C), does not substantially cause filler settling, and exhibits good handleability during use.

Further, by changing the combination and the density of polar organic substituents such as COOR groups, CN groups, OH groups, vinyl groups, amino groups, nitroso groups, and carbonyl groups depending on the resin to be used, the temperature at which the interaction is eliminated can be changed, and starting materials for resin intended for the case where the temperature in actual use is high or low can be produced.

The resin material according to the invention described above can be used to portions of high voltage electric equipment, for example, molded transformers, switch gears, motors, and inverters that require insulation. In addition, the resin material of the invention is applicable also to operation rods and insulation rods of breakers, etc.

Specific examples and the effect thereof of the invention are to be described with reference to Examples 1 to 8.

### Example 1

In this example, an epoxy resin was used for a polar resin material and maleic acid unhydride as an acid anhydride was used for a hardener. As a filler, 70 parts by weight of fractured silica of 20µm size (median radius) was added based on the resin material.

Nitrile butadiene rubber particles were used for fine particles. The addition amount was 2 wt% based on the mixture of the resin and the hardener, and the minor diameter of the fine particle was 100 nm.

Fig. 1 is a schematic view illustrating an electrostatic interaction between the addition particles used in this example. RX in the drawing represents a CN group in this example.

In this example, since the fine particle comprises nitrile butadiene rubber, CN groups as the organic substituents having polarity and causing polarization of charges are exposed to the surface of a particle with no particular surface modification. Accordingly, interaction occurs also between the fine particles to each other. In particular, since the addition amount is 2 wt% based on the epoxy resin, interaction tends to occur rather to the acid anhydride or epoxy resin main body. The state is to be described with reference to Fig. 2 and Fig. 3.

As shown in Fig. 2, the maleic acid anhydride as the hardener has a negative charge at oxygen in the carbonyl group and a positive charge at a carbon atom bonded thereto. Accordingly, electrostatic interaction with the addition particle occurs.

Further, as illustrated in Fig. 3, also in the epoxy resin molecule (oligomer) main body, epoxy groups and carboxyl group are present, which have charges and cause interaction with the addition particles respectively in the same manner as described above.

Investigation was conducted as to what viscosity characteristics are shown by the addition of the nitrile butadiene rubber particles to the resin hardener. The result is shown in Fig. 4 and Fig. 5. Fig. 4 is a graph that compares the viscosity at 40°C of a hardener mixture incorporated with fractured silica hardener between a case with and without addition of nitrile butadiene rubber particles. Fig. 5 is a graph illustrating the result where the temperature is increased up to a molding temperature (80°C) of them. In the graph, a shear stress is expressed on the abscissa and a viscosity is expressed on the ordinate.

As can be seen from Fig. 4, it was found that the hardener mixture shows typical pseudo plasticity when the nitrile butadiene rubber particles are present. The pseudo plasticity means a phenomenon that viscosity becomes higher when a shear stress, to put simply, a stirring force, is not exerted on the resin. The phenomenon occurs because the CN groups are present at the surface of the fine particles to cause interaction with the resin hardener. As can be seen from Fig. 4, when the resin material is stored in a stationary state in a drum can, the viscosity reaches 10 times as high as the usual case and the effect of suppressing filler settling can be expected.

Further, as illustrated in Fig. 5, it was found that when the temperature is increased to a molding temperature of the resin (80°C), the pseudo plasticity shown in Fig. 4 was eliminated to show a viscosity substantially identical with the case of not using the nitrile butadiene rubber particles. Accordingly, the molding operation can be practiced as usual.

Further, an experiment was performed to assess whether the filler actually settled or not. Fig. 6 shows the result. The storage temperature of the resin material was set at 40°C.

It can be seen from Fig. 6 that the nitrile butadiene rubber particles have a remarkable effect of preventing the filler from settling and settling did not occur at all even after lapse of 20 days. It was found that such apparent anti-settling effect was developed.

### Example 2

Instead of the elastomer particles described previously in Example 1, one of silica particles and alumina particles, or combination of them can be used as fine particles.

Particularly, when the elastomer particles are used, a secondary effect capable of improving cracking resistance of the resin is obtained. It was confirmed in the example of Example 1 that cracking resistance (fracture toughness value) was increased by 1.5 times.

The effect of improving the cracking resistance cannot be expected so much for using the silica particles, an effect of improving the electric characteristics or improving the insulation resistance can be expected.

Further, when alumina particles are used, anticorrosion effect to a corrosive gas attributable to SF₆ (HF, H₂S) can be expected under the condition that the resin material is used as parts of a breaker.

### Example 3

Styrene butadiene rubber particles having 150 nm of minor particle diameter (modified at the surface with carboxyl groups) were used for the fine particles, they were introduced into the mixture of the epoxy resin and the hardener while changing the addition amount based on the resin material, and the viscosity (viscosity when shear stress was applied, at a temperature of 80°C) was measured. Fig 7 shows the result.

As can be seen from Fig. 7, it was found that the viscosity increases abruptly at the stage of exceeding 10 wt% into a state difficult to be handled by a usual vacuum potting method. It was also found that the mixture at 15 wt% is in a substantially semi-solid state which is difficult even for mixing. From the result, it was found that the particle concentration is preferably 15 wt% or less. Further, since the anti-settling effect was developed even at 0.5 wt%, it was found that the lower limit is preferably 0.5 wt%.

### Example 4

A settling velocity and a Brownian motion velocity were estimated while changing the particle diameter of the fine particles and assuming the use of an epoxy resin and a hardener with no addition of a filler. The result is shown in Fig. 8.

It was found from Fig. 8 that both of the velocities are balanced at the particle diameter of the fine particles of about 200 nm and the Brownian motion velocity becomes higher at the particle diameter of 200 nm or less (assumed temperature at 40°C). In view of the result, it was found that settling may possibly occur depending on the amount of the filler at the particle diameter of the fine particles of 200 nm or more. Accordingly, it was found that the size of the fine particle (minor diameter) is preferably 200 nm or less.

### Example 5

Silica produced by a flame method was used as fine particles addition.

In the silica produced by the flame method, since dehydration condensation occurred in the flame, the amount of OH groups at the surface was suppressed compared with usual silica. Accordingly, since the flame method silica is highly compatible with the resin having relatively less polar groups such as OH groups and the OH groups at the surface are not zero, the effect identical with that of the examples described above could be obtained.

On the other hand, when a treatment of completely removing the OH groups at the silica surface (hydrophobization) was implemented, the compatibility was extremely worsened and the effect was also lost.

### Example 6

Silica or alumina as fine particles addition in which OH groups derived from the production were present on the surface of the particles were modified by organic species containing carboxyl groups or CN groups by substituting the OH groups with a silane coupling agent or the like. As a result, the anti-settling effect could be developed with no effect on the handleability.

Further, the OH groups could be removed substantially or both of them could be present in admixture by controlling the process conditions used for substitution.

Also in this case, the anti-settling effect could be developed with no effect on the handleability.

### Example 7

While COOH groups are scarcely present at the surface of the nitrile butadiene rubber having CN groups, carboxyl groups were added by oxidizing internal double bonds in the inside.

As a result, by increasing the COOH groups of the nitrile butadiene rubber, the viscosity derived from the pseudo plasticity at a state where the shear stress is zero could be increased from 15 Pa•s to 35 Pa•s. Further, by applying the shear stress, the value of 35 Pa•s could be lowered rapidly to 16 Pa•s and the anti-settling effect could be developed with no effect on the handleability.

### Example 8

The resin material described above can be used at portions of high voltage equipment such as transformers, motors, breakers, and high voltage devices where the insulation is necessary.

Use of the resin material of Example 1 for a mold transformer as a high voltage equipment is to be described.

As illustrated in Fig. 9, a mold transformer 1 includes a core 2, primary coils 3 at a low voltage wound around the core 2, secondary coils 4 at a higher voltage than that of the primary coil 3 provided to the outside of the primary coils 3, and an outer circumferential shielding pseudo coils 5 provided to the outer side of the secondary coil 4.

The primary coils 3, the secondary coils 4, and the outer peripheral circumferential shielding pseudo coils 5 were resin molded integrally with an insulation resin material 6. As the insulation resin material 6, the resin material described above in Example 1 was used.

The insulation material 6 is formed as described below.

First, a liquid mixture formed by stirring and mixing a not hardened resin, fine particles, and a hardener by a planetary centrifugal mixer is injected under pressure into a mold.

Then, after the liquid mixture is injected, the resin is hardened to form the insulation material 6.

Further, before the insulation material 6 is formed, fine voids of an enamel winding wire that forms coils are coated with varnish. Thus, voids between the coils and the resin can be prevented reliably.

The outer peripheral shielding pseudo coils 5 are connected by way of the insulation resin material 6 at one end of the secondary coils 4 to a ground potential. In the mold transformer 1, since the resin material according to the invention is used, fracture toughness is improved and the strength is accordingly improved. Thus, the molded transformer 1 can be reduced in size and weight and improved in working life.

Further, the resin material according to the invention can suppress electric discharge at deteriorated portions where cracks are generated, does not cause partial discharge in the mold transformer 1, can maintain reliability for a long time, and enables long time operation.

Further, the mold transformer can be used to a higher voltage at a size identical with that of the conventional transformer.

In the high voltage equipment, the resin material to be used is not restricted to that in Example 1. Further, the high voltage equipment is not restricted to the mold transformer but the resin material of the invention is applicable to other types of transformers, motors, breakers, high voltage devices, etc.

The present invention is not restricted to the embodiments described above various modifications and applications are possible.

## Claims

1. An insulation resin material comprising a filler for high voltage equipment, comprising:
a polar resin,
a hardener,
the filler, and
fine particles added to at least one of the polar resin and the hardener and having polar organic substituents exposed at the surface thereof.

2. The insulation resin material for high voltage equipment according to claim 1, wherein
the organic substituents are exposed at the surface of the fine particles, so that the insulation resin material for the high voltage equipment develops pseudo plasticity at a normal temperature before hardening and eliminates the pseudo plasticity at a temperature in use.

3. The insulation resin material for high voltage equipment according to claim 1 or 2, wherein
at least one chemical species of COOR groups (R represents hydrogen, an alkyl group, or an organic substituent having a multiple bond), CN groups, OH groups, vinyl groups, amino groups, nitroso group, and carbonyl groups is exposed as the organic substituents at the surface of the fine particles.

4. The insulation resin material for high voltage equipment according to claim 1 or 2, wherein
the polar resin is an epoxy resin.

5. The insulation resin material for high voltage equipment according to claim 1 or 2, wherein
the hardener comprises an organic compound containing an acid anhydride structure.

6. The insulation resin material for high voltage equipment according to claim 1 or 2, wherein
the fine particles comprise at least one of silica particles, elastomer particles, and alumina particles.

7. The insulation resin material for high voltage equipment according to claim 1 or 2, wherein
the minor diameter of the fine particles is 200 nm or less.

8. The insulation resin material for high voltage equipment according to claim 1 or 2, wherein
the addition amount of the fine particles is from 0.1 wt% to 15 wt% based on the insulation resin material for high voltage equipment.

9. The insulation resin material for high voltage equipment according to claim 1 or 2, wherein
the fine particles comprise silica particles and the silica particles are silica produced by a flame method.

10. The insulation resin material for high voltage equipment according to claim 1 or 2, wherein
the fine particles comprise elastomer particles and the elastomer particles are one of nitrile butadiene rubber, styrene butadiene rubber, or silicone rubber.

11. High voltage equipment having an insulation material and a conductive portion in which the insulation resin material for high voltage equipment according to claim 1 or 2 is used as the insulation material.
